# EUROPEAN PATENT SPECIFICATION

(11) **EP 0 393 516 B1**
(45) Date of publication and mention of the grant of the patent: **21.09.1994**
(21) Application number: 90107045.8
(22) Date of filing: 12.04.1990
(51) Int. Cl.: B01F 15/00

(54) **An enamelled stirrer with paddles detachably fixed on the shaft in an enamel to enamel coupling without any gasket**
Emailrührer mit von einem Schaft abnehmbarer Schaufeln mit Email-Email-Kupplung ohne Dichtung
Remueur émaillé à pales montées amovibles sur l'arbre avec accouplement émail-émail sans joint

(30) Priority: 17.04.1989 IT 2017489; 07.08.1989 IT 2146989
(43) Date of publication of application: 24.10.1990
(73) Proprietor: TYCON Spa, 30027 San Donà di Piave (VE) (IT)
(72) Inventor: Artusi, Gianni, I-30027 San Dona' Di Piave (IT)
(74) Representative: Gervasi, Gemma, Dr.

(56) References cited:
- EP-A- 0 145 370
- US-A- 2 852 238
- US-A- 4 628 574

## Description

The present invention refers to entirely enamelled stirrers with separable paddles, in which the coupling between shaft and paddles is made by direct contact of enamelled surfaces, enamel on enamel, with no gasket.

The resistance of the coupling to mechanical stresses is obtained by causing a strong mechanical pressure on the contact surfaces of the coupling, employing oval (in particular elliptic) coupling or mixed half conical and half oval coupling, without having recourse to methods based on thermally induced dimensional changes.

As known, enamelled stirrers with separable paddles are employed in completely closed (coverless) reaction vessels, provided with manholes of reduced diameter so that they can withstand elevated working pressures.

They can be employed, in particular in case one wants to exchange in a said closed coverless vessel a previously used stirrer of small dimensions, e.g. a propeller type stirrer for a larger stirrer, i.e. an anchor type stirrer.

The detachable paddle system has the advantage that the paddles can be exchanged on an installed shaft, leaving the whole mechanical apparatus untouched.

Essentially two types of enamelled stirrers with separable paddles with direct gasket-free paddle to shaft connection are known up to the present:
1) The type described in the Sybron US-A-4.221.488, in which the connection between shaft and paddle is obtained by a cryogenic system on perfectly cylindrical contact surfaces machined in such a way as to have a slight dimensional interference between the inserting and the receiving member (at a same temperature).
2) The type described in the De Dietrich European Patent EP-A-145.370, in which the connection between shaft and paddle takes place on slightly conical surfaces and is performed by forced insertion. Furthermore, the end of the shaft has a paddle bearing hub provided with radial cavities for the insertion of the single paddles having an insertion stem.

See also US-A-4 628 574.

The applicant has now realized new types of enamelled stirrers with separable paddles, which present some advantages with respect to both the prior art types.

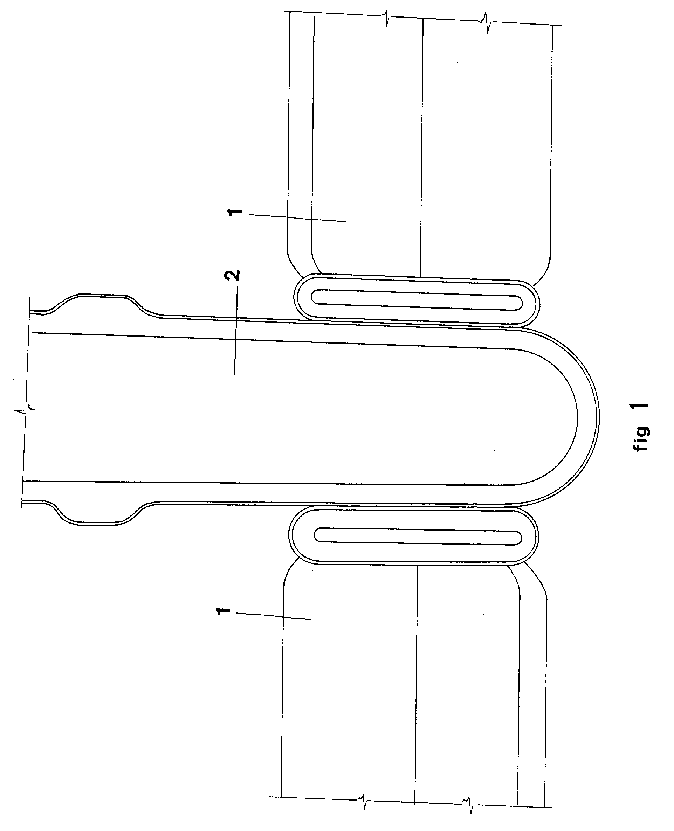

The first type realized by the applicant presents a completely enamelled impeller in one piece. The connection with the shaft can be performed in two ways: in the first (see fig. 1) the impeller 1 is provided with a central oval or mixed oval/frusto-conical hole through which the suitably oval or mixed oval/frusto-conical shaped shaft 2 is inserted to obtain a perfect fit.

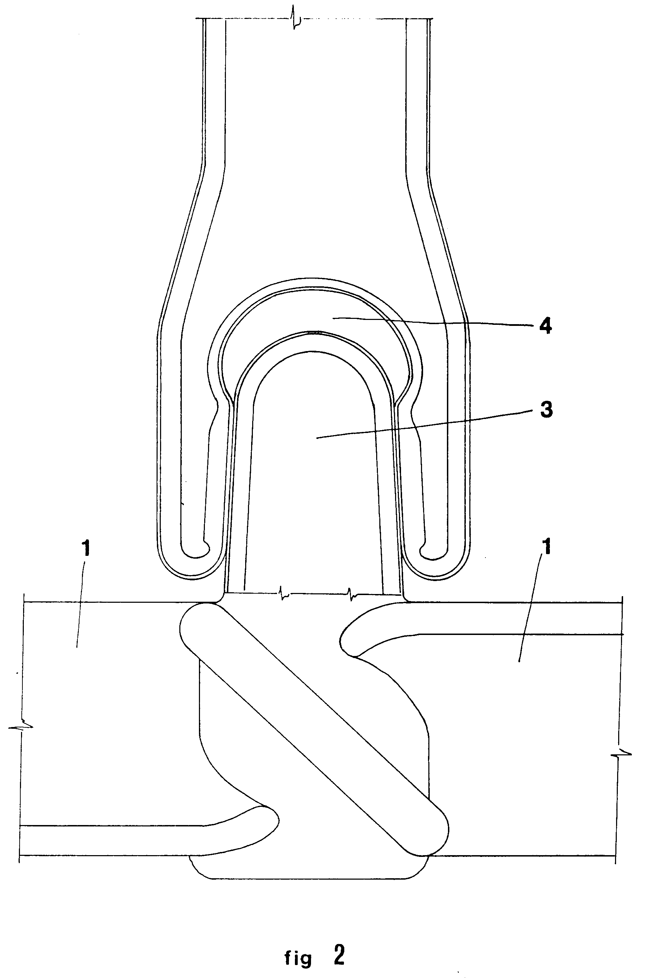

In the second way (see fig. 2), the impeller is provided with a central oval or mixed oval/frusto-conical shaped journal 3 facing up, which journal can be inserted in the shaft, the lower end of which is bell shaped 4 and internally machined to a oval or oval/conical surface corresponding to said journal.

The second type realized by the applicant comprises single detachable paddles inserted in a central hub, which on its turn is fixed at the end of the stirrer shaft. The connections between paddles and hub are performed through frusto-conical junctions and forced insertion.

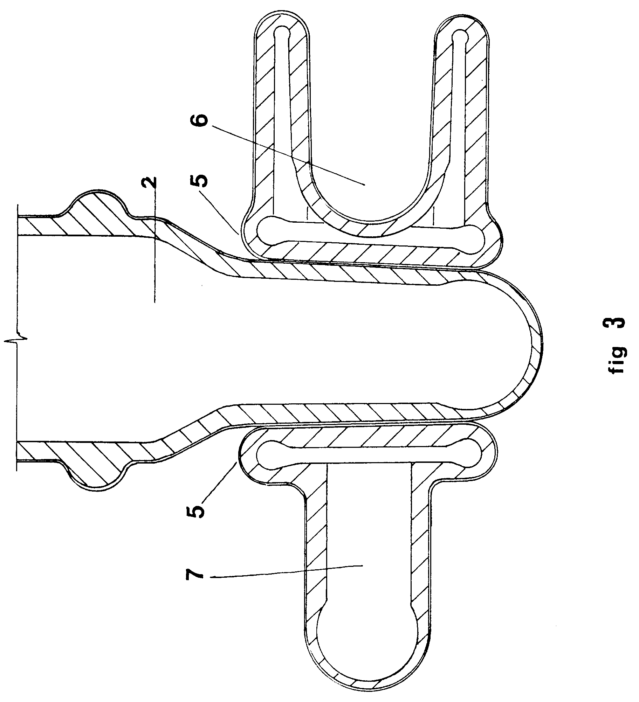

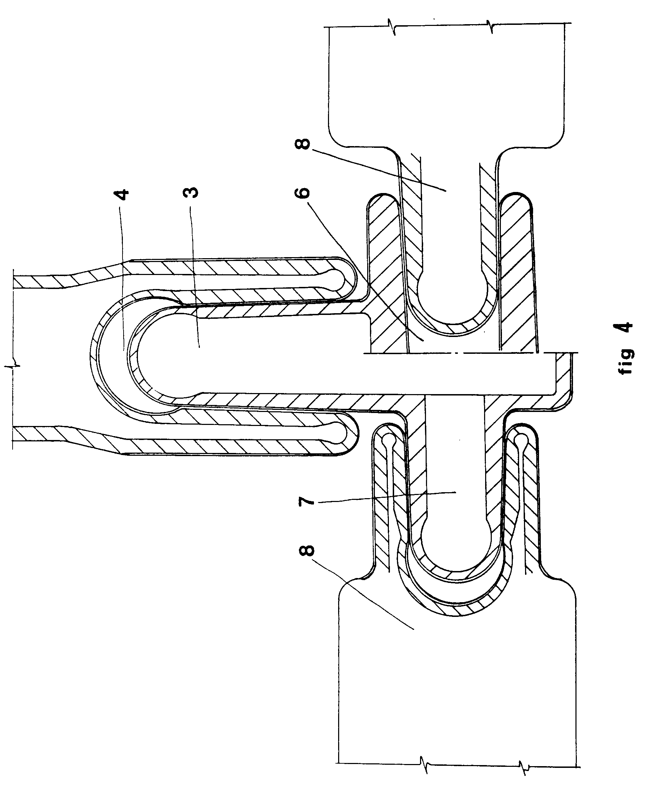

Various types can be foreseen, as represented in fig. 3 and 4. In fig. 3 the central hub is ring shaped with an oval or oval/frusto-conical central hole 5, in which the stirrer shaft is inserted. The hub may show along its outside circumference frusto-conical cavities 6, shown on the right hand side of the figure, for inserting the stems of the radially arranged paddles, or it can show radially distributed pins 7 (see left hand side of the figure) on which each single paddle provided with a suitable frusto-conical cavity can be inserted.

Fig. 4 shows a further possible type in which the central hub is provided with an axial vertical journal 3, which fits into the bell shaped end 4 of the stirrer shaft also through an oval or oval/frusto-conical connection. The hub may show connections with the single paddles of the type male paddle/female hub as represented on the right side of the figure or vice-versa as shown on the left side.

In all the types of realization of the invention, as mentioned above, the paddle/shaft and hub/shaft connections take place on oval or oval/frusto-conical surfaces accurately machined to obtain perfectly adapted contact surfaces.

The taper is suitably very small (semi-angle at vertex of the order of 1° to 2°) to allow to obtain high values of the static coupling pressure without a too high insertion pressure at the time of connecting the two parts, thus making the connection easier. The conicity may be comprised between 5:100 and 3:100, in particular 3:100 which allows to obtain a strong coupling with lower axial loads in the assembling.

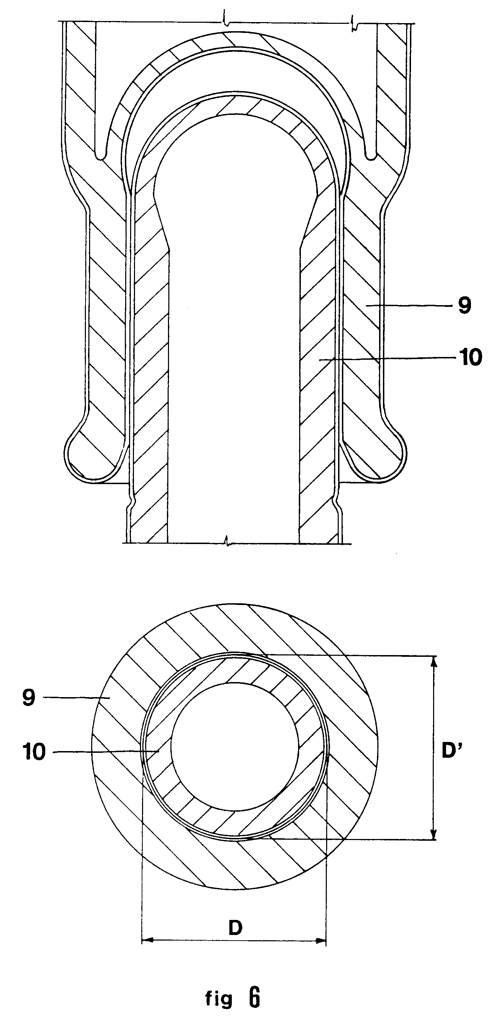

The difference between the maximum D and the minimum D' axis in the oval (in particular elliptic) cross-section of the coupling can be of little value for instance between 6% and 10% (see fig. 6).

As one can see from the enclosed figures, the parts forming the connections between paddle and hub and between hub and shaft are shaped in such a way as to give the structures a certain degree of elasticity; see in particular the cavity of the hub of fig. 1 and the reduced thickness of the walls in the critical points, as well as the suitably curved profiles of the walls themselves in fig. 2-4.

Thus, an optimal mechanical resistance of the coupling is obtained, which is not altered by thermal stresses.

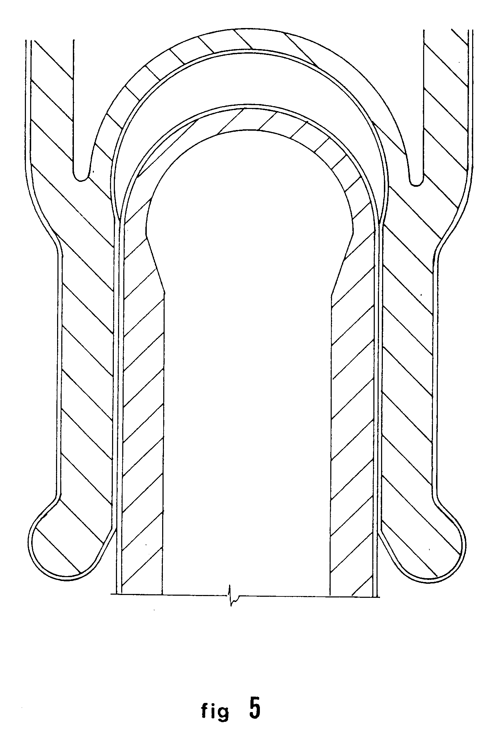

The female part may be made with a single wall, to simplify the construction (see fig. 5).

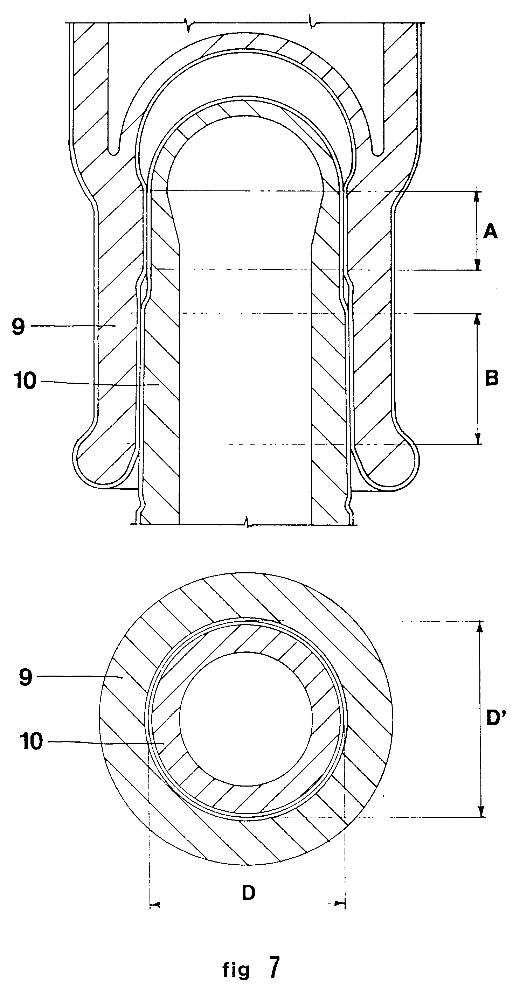

In fig. 7 a mixed coupling is shown, i.e. having a first part A having cylindrical shape and oval cross section and a second part B having conical shape and circular cross-section. The lower end 9 of the stirrer shaft is bell shaped and machined inside to an oval (in particular elliptic) shape in zone A and to a conical circular shape in zone B.

The cavities as well as the pins on the paddle bearing hub may be arranged in one or more layers, in other words on a single horizontal plane or on more planes at different levels.

In all the types of realization of the invention, as mentioned above, the paddle/shaft and hub/shaft connections take place on surfaces accurately machined to obtain perfectly adapted contact surfaces.

The detachable paddle stirrers of the present invention, in the various construction forms described above, show, with respect to the stirrer of the Sybron patent US-A-4.221.488, the advantage of not requiring in the assembling the use of cryogenic fluids or of thermal devices which may complicate the operation, while the machining of the parts does not require the extreme precision required in the case of the Sybron stirrer (precision which must be the higher, the lower the difference in temperature obtained in the assembling step). Furthermore, disassembly of single blades or of the hub is possible with the aid of a simple mechanical extraction device, while disassembling the hub of the Sybron stirrer is a complex operation based on the possibility of obtaining a high difference of temperature between two pieces in close contact with each other.

With respect to the stirrer according to the De Dietrich patent EP 145.370, the ones according to the present invention show the advantage that the hub holding the paddles is a separate element which is introduced inside the reaction vessel through a manhole, and then inserted on the shaft when assembling the paddles; as a consequence, the shaft, which is mounted inserting it through the central hole (usually of small diameter), may be sufficiently long to reach near the bottom of the vessel.

The hub attached to the shaft according to the De Dietrich patent cannot usually be inserted through the central hole (which is too small) and it is therefore necessary to insert the shaft with attached hub through the side manhole; obviously, in this case the shaft should not be too long (total length equal to the distance between manhole and bottom of the vessel).

Thus the hub holding the paddles will always be at a considerable distance from the bottom of the vessel.

The equipment for assembling the paddle holding hub or of the single paddles, according to the present invention, is very simple and of a conventional type. In particular, one can use a two-part collar attached on the shaft, which is provided with bolts for pulling (or pushing in the disassembling).

Suitable swellings on the shaft (see fig. 1 and 3) allow to block the collar.

## Claims

1. Entirely enamelled stirrer suitable for mounting in a closed coverless reaction vessel, provided with separable paddles, which are fixed on the shaft through a hub which can form a single piece (1) with the paddles, by operating inside the vessel, characterized in that the hub holding the paddles is separated from the shaft and is fixed on it through enamel to enamel coupling on oval contact surfaces or mixed conical/oval surfaces.

2. Stirrer according to claim 1, characterized in that the paddle holding hub is provided with a central oval or mixed conical/oval shaped hole (5), in which the stirrer shaft is inserted.

3. Stirrer according to claim 1, characterized in that the paddle holding hub shows an axial vertical upward directed journal (10) of oval or mixed conical/oval shape which is inserted in a corresponding cavity at the end (9) of the bell shaped stirrer shaft.

4. Stirrer according to claim 1 further characterized in that the paddles do not form a single piece with the hub, the single radially situated paddles (8) being fixed on the hub through coupling on frusto-conical enamelled contact surfaces.

## Patentansprüche

1. Vollständig emaillierter Rührer zur Montage in einem geschlossenen Reaktionsgefäß ohne Deckel, ausgestattet mit abnehmbaren Schaufeln, welche an der Welle durch eine Nabe befestigt sind, die zusammen mit den Schaufeln auch ein Stück (1) bilden kann, durch Betrieb innerhalb des Gefäßes, dadurch gekennzeichnet, daß die die Schaufeln tragende Nabe von der Welle getrennt und daran angebracht ist, durch eine Emaille-Emaille-Kopplung von ovalen Kontaktflächen oder konisch/oval kombinierten Flächen.

2. Rührer gemäß Anspruch 1, dadurch gekennzeichnet, daß die die Schaufeln tragende Nabe in der Mitte ovale oder konisch/oval kombiniert geformte Löcher aufweist, in welche die Rührerwelle eingesetzt ist.

3. Rührer gemäß Anspruch 1, dadurch gekennzeichnet, daß die die Schaufeln tragende Habe einen axial senkrecht nach oben gerichteten Zapfen (10) aufweist, der eine ovale oder konisch/oval kombinierte Form hat und der in einen entsprechenden Hohlraum am Ende (9) der glockenförmigen Rührerwelle eingelassen ist.

4. Rührer gemäß Anspruch 1, weiterhin dadurch gekennzeichnet, daß die Schaufeln nicht ein Stück mit der Habe bilden, sondern daß die einzelnen radial angeordneten Schaufeln (8) an der Habe durch Kopplung von kegelstumpfförmig emaillierten Kontaktflächen an der Nabe befestigt sind.

## Revendications

1. Agitateur entièrement émaillé, propre à être monté dans un réacteur fermé sons couvercle, comportant des pales amovibles qui sont fixées sur un arbre par l'intermédiaire d'un moyeu qui peut former une seule pièce (1) avec les pales, le montage étant exécuté à l'intérieur du réacteur, caractérisé en ce que le moyeu porte-pales est séparé de l'arbre et est fixé sur celui-ci par accouplement émail contre émail sur des surfaces de contact ovales ou des surfaces mixtes coniques/ovales.

2. Agitateur selon la revendication 1, caractérisé en ce que le moyeu porte-pales présente un trou central, de forme ovale ou mixte conique/ovale, dans lequel l'arbre de l'agitateur est inséré.

3. Agitateur selon la revendication 1, caractérisé en ce que le moyeu porte-pales comporte un tourillon axial (10), dirigé verticalement vers le haut, de forme ovale ou mixte conique/ovale, qui est inséré dans une cavité correspondante à l'extrémité (9) de l'arbre d'agitateur réalisée en forme de cloche.

4. Agitateur selon la revendication 1, caractérisé en outre en ce que les pales ne forment pas une seule pièce avec le moyeu, les pales individuelles (8), disposées radialement, étant fixées sur le moyeu par accouplement par des surfaces de contact émaillées tronconiques.
